Europäisches Patentamt

European Patent Office

Office européen des brevets

(11) Veröffentlichungsnummer: **0 019 120**
**A1**

## (12) EUROPÄISCHE PATENTANMELDUNG

(21) Anmeldenummer: **80102248.4**

(22) Anmeldetag: **25.04.80**

(51) Int. Cl.³: **C 08 L 75/08**
//(C08L75/08, 21/00, C08G18/10, 18/76)

(30) Priorität: 28.04.79 DE 2917314

(43) Veröffentlichungstag der Anmeldung:
26.11.80 Patentblatt 80/24

(84) Benannte Vertragsstaaten:
AT BE CH DE FR GB IT LI LU NL SE

(71) Anmelder: **Häger & Kässner GmbH**
**Lange Strasse 335**
**D-4700 Hamm 1(DE)**

(72) Erfinder: **Martinkat, Edwin**
**Tulpenstrasse 6**
**D-4730 Ahlen 4(DE)**

(74) Vertreter: **von Kreisler, Alek et al,**
**Deichmannhaus am Hauptbahnhof**
**D-5000 Köln 1(DE)**

(54) Verfahren zur Herstellung elastischer, wetterbeständiger Flächengebilde.

(57) Die Erfindung betrifft ein Verfahren zur Herstellung elastischer, wetterbeständiger Flächengebilde durch Mischen eines durch Feuchtigkeit aushärtenden Polyurethanbindemittels, welches ein Prepolymer auf der Basis von aromatischen Polyisocyanaten und Polyolen darstellt, mit Gummi- und/oder elastomeren Kunststoffgranulaten sowie gegebenenfalls weiteren Zusatz- und Hilfsstoffen, Formgebung und Aushärtung der Mischung unter Einwirkung von Feuchtigkeit. Das Verfahren ist dadurch gekennzeichnet, daß das feuchtigkeitshärtende Prepolymer durch

a) Umsetzen von Toluylendiisocyanat mit einem Polyol bei einem NCO/OH-Verhältnis von wenigstens 1 : 1 und, sofern nach der Umsetzung noch überschüssige Toluylendiisocyanatmonomere vorhanden sind, Entfernen dieser auf unter 1 % an freiem Toluylendiisocyanat, und

b) anschließendes Umsetzen des Reaktionsproduktes der Stufe a) mit Diphenylmethandiisocyanat und einem Polyol in Mengen, daß das Prepolymere 5 - 15 Gew.-% freie NCO-Gruppen aufweist und weniger als 1 % freies Toluylendiisocyanat enthält.

VON KREISLER   SCHÖNWALD   EISHOLD   FUES
VON KREISLER   KELLER   SELTING   WERNER

Häger & Kässner GmbH
4700 Hamm

PATENTANWALTE

Dr Ing von Kreisler † 1973
Dr. Ing. K. Schonwald, Köln
Dr.-Ing. K. W Eishold, Bad Soden
Dr. J. F. Fues, Koln
Dipl.-Chem. Alek von Kreisler, Köln
Dipl.-Chem. Carola Keller, Koln
Dipl.-Ing G Selting, Koln
Dr. H.-K. Werner, Köln

DEICHMANNHAUS AM HAUPTBAHNHOF
D-5000 KÖLN 1
AvK/Pf        24.April 198o

**BEZEICHNUNG GEÄNDERT**
siehe Titelseite

Verfahren zur Herstellung elastischer, wetterbeständiger Schichtstoffe

---

Die Erfindung betrifft die Herstellung elastischer Schichtstoffe aus Gummi- oder Kunststoffteilchen  unter Verwendung von Polyurethanbinde- oder Klebemitteln.

Die Herstellung elastischer Schichtstoffe aus Gummi- oder
Kunststoffteilchen unter Verwendung von Polyurethanbinde-
oder Klebemitteln ist bereits bekannt. Als Polyurethanbindemittel werden dabei entweder Zweikomponenten-Polyurethan-
Bindemittel oder Einkomponenten-Polyurethan-Bindemittel verwendet. Die erstgenannten werden durch Vermischen eines Polyisocyanats mit einer Polyhydroxyverbindung gebildet, wobei
die beiden Komponenten miteinander reagieren und das Polyisocyanat zusätzlich mit der Luftfeuchtigkeit reagiert. Dadurch werden die Eigenschaften des ausgehärteten Bindemittels
in unkontrollierbarer Weise beeinflußt. Die Einkomponenten-
Polyurethan-Bindemittel schalten diesen Nachteil aus, da sie
nur mit der Luftfeuchtigkeit reagieren und aushärten.

Diese Einkomponenten-Polyurethan-Bindemittel bestehen im allgemeinen aus Prepolymeren, die Isocyanatgruppen enthalten und aus Polyhydroxyverbindungen und einem Überschuß an Polyisocyanaten gebildet werden.

Die bekannten Einkomponenten-Polyurethan-Bindemittel haben verschiedene Nachteile.

Einkomponenten-Polyurethan-Bindemittel, die auf Prepolymeren ren aus Toluylendiisocyanat und Polyhydroxyverbindungen basieren, haben den Nachteil der gesundheitlichen Gefährdung bei der Verwendung wegen ihres Gehalts an freiem monomerem Toluylendiisocyanant.
Setzt man den Monomerengehalt herab, dann gelangt man zu hochviskosen Flüssigkeiten, die nicht genügend reaktiv sind und daher mit der Luftfeuchtigkeit nicht ausreichend reagieren und aushärten können. Zwar sindSchichtstoffe auf der Basis von Toluylendiisocyanant-Prepolymeren hinsichtlich ihrer Wetterbeständigkeit recht gut, jedoch haben sie den Nachteil der Gefährdung der Gesundheit aufgrund ihres Gehaltes an freiem monomerem Diisocyanat.

Prepolymere auf der Basis von Diphenylmethan-4,4'-diisocyanat eignen sich wegen ihrer Kristallisationsneigung, die zu schlechter Verarbeitbarkeit führt, nicht für die Zwecke der Schichstoffherstellung.

Die DE-OS 24 47 625 beschreibt ein Verfahren zur Herstellung elastischer Schichtstoffe, bei dem man ein durch Einwirkung von Feuchtigkeit aushärtendes Polyurethan-Bindemittel auf Basis von hydroxylgruppenhaltigen Polyäthern und Polyisocyanaten mit Gummi- und/oder elastomeren Kunststoff-Granulaten sowie gegebenenfalls weiteren Hilfs- und Zusatzstoffen mischt und die Mischung nach erfolgter Formgebung mit Wasser aushärtet, wobei das Verfahren dadurch gekennzeichnet ist, daß man als feuchtigkeitshärtendes Polyurethan-Bindemittel auf Basis von hydroxylgruppenhal-

- 3 -

tigen Polyäthern und Polyisocyanaten ein freie Isocyanatgruppen aufweisendes Umsetzungsprodukt dieser Reaktionspartner im NCO-OH-Verhältnis von 2 : 1 bis 15 : 1 einsetzt,
wobei die Polyisocyanat-Komponente zu 20 bis 80 Gew.-% aus
2,4'-Diisocyanatodiphenylmethan und zum Rest aus 4,4'-
2,2' Diisocyanatodiphenylmethan und/oder höherfunktionellen Polyisocyanaten der Diphenylmethanreihe besteht. Derartige auf Diphenylmethandiisocyanat (MDI) basierende Prepolymere für die Schichtstoffherstellung enthalten zwar kein
freies monomeres Diisocyanat, weisen jedoch als Nachteil
eine geringe Alterungsbeständigkeit auf.

Aufgabe der vorliegenden Erfindung ist es, die oben beschriebenen Nachteile der bekannten Polyurethan-Bindemittel
zu vermeiden.

Diese Aufgabe wird durch das erfindungsgemäße Verfahren gelöst. Es wurde gefunden, daß man durch Verwendung eines
Prepolymeren, das aus dem Umsetzungsprodukt von Toluylendiisocyanat (TDI) mit Polyolen und anschließender Umsetzung
mit Diphenylmethandiisocyanat und Polyolen erhalten
worden ist, als Bindemittel für Gummi- und elastomere
Kunststoffe Schichtstoffe erhalten, die die Nachteile des
Standes der Technik nicht aufweisen und insbesondere im
wesentlichen frei von schädigenden freien Diisocyanatmonomeren sind und gleichzeitig eine ausgezeichnete Wetterbeständigkeit und Beständigkeit gegen Alterung aufweisen.

Gegenstand der Erfindung ist demnach ein Verfahren zur
Herstellung elastischer, wetterbeständiger Schichtstoffe
unter Verwendung von Gummi- und/oder elastomeren Kunststoffgranulaten sowie gegebenenfalls weiteren Zusatz- und
Hilfsstoffen und von durch Feuchtigkeit aushärtenden Polyurethanbindemitteln auf der Basis von aromatischen Polyisocyanaten und hydroxylgruppenhaltigen Polyäther, das da-

- 4 -

durch gekennzeichnet ist, daß man als Feuchtigkeits-härtendes Polyurethan-Bindemittel ein Prepolymer einsetzt, das durch

a) Umsetzung von Toluylendiisocyanat mit äquimolaren Mengen eines Polyols und

b) anschließendes Umsetzen des Reaktionsprodukts der Stufe a) mit Diphenylmethandiisocyanat und einem Polyol erhalten worden ist.

Als Toluylendiisocyanat können beliebige Gemische der 2,4- und 2,6-Isomeren des TDI verwendet werden. Vorzugsweise wird ein Gemisch von 80/20 Gew.-% 2,4-/2,6-TDI verwendet.

Als Diphenylmethandiisocyanat (MDI) können beliebige Gemische und insbesondere auch reines 4,4'-isomeres MDI verwendet werden. Beispielsweise wird ein Gemisch aus 85 Gew.-% 4,4-MDI und 15 Gew.-% 2,4-MDI verwendet.

Ein Vorteil der vorliegenden Erfindung liegt auch darin, daß man als MDI das 4,4'-Isomere in einem hohen Ausmaß verwenden kann, ohne daß die Nachteile der Kristallisationsneigung auftreten.

Ferner ist es möglich, gemäß der Erfindung zusätzlich zu dem MDI oder anstelle des MDI die Homologen des MDI bzw. die von ihm abgeleiteten Modifikationen zu verwenden. Als Beispiele seien durch Carbodiimidisierung hergestellte MDI-Produkte genannt.

Als Polyole können beim erfindungsgemäßen Verfahren alle für die Umsetzung mit Isocyanaten geeigneten Polyole verwendet werden. Beispielsweise kommen als Polyole Diole, Triole oder deren Gemische bzw. Polyhydroxypolyäther mit beispielsweise 2 - 3 Hydroxylgruppen infrage. Die Molekulargewichte der Polyole bzw. der Polyhydroxypolyäther liegen im Bereich von 400 bis 6 000, vorzugsweise von 1000 bis 4000.
Geeignet sind beispielsweise Anlagerungsprodukte von Äthylenoxid und/oder Propylenoxid an Wasser, Äthylenglykol, Propylenglykol, Trimethylolpropan oder Glyzerin.

Zur Herstellung der Prepolymeren wird zunächst in einer ersten Stufe Toluylendiisocyanat mit äquimolaren Mengen eines Polyols vermischt und umgesetzt. Dabei soll der Gehalt an monomerem TDI möglichst gering und vorzugsweise unter 1 % und insbesondere unter 0,5 % liegen.

Die Einstellung des Gehalts an monomerem TDI im Endprodukt der ersten Stufe kann auch durch eine anschließende Destillation z. B. durch eine Dünnschichtdestillation erfolgen.

In einer zweiten Stufe wird dem Umsetzungsprodukt aus Polyol und TDI dann Dimethylmethandiisocyanat und weiteres Polyol zugegeben und die Umsetzung durchgeführt. Das Endprodukt soll so wenig freies monomeres TDI wie möglich enthalten, d. h. vorzugsweise weniger als 1 % und insbesondere nicht mehr als 0,3 bis 0,5 %. Das als Endprodukt erhaltene Prepolymere enthält etwa 5 bis 15 Gew.-% freie NCO-Gruppen.

Die Umsetzung sowohl in der ersten als auch in der zweiten Stufe erfolgt bei Temperaturen von 20 bis 100° C, vorzugsweise bei 70° C. Die erhaltenen Prepolymeren weisen bei 20° C eine Viskosität von 2 500 bis 4 000 mPas auf.

Die beim erfindungsgemäßen Verfahren verwendeten Gummioder Elastomerteilchen können beliebiger Größe und Form sein. Geeignet sind z. B. elastische Granulate aus Gummi- oder Kunststoffabfällen in Korngrößen von 0,5 bis 6 mm. Hierbei können die bei der Reifenrunderneuerung oder der Herstellung von Gummi- oder Kunststoffartikeln entstehen-

- 6 -

den Abfälle verwendet werden.

Zur Herstellung der erfindungsgemäßen Schichtstoffe werden 10 Gew.-teile bis 30 Gew.-teile, vorzugsweise 25 Gew.-teile des prepolymeren Bindemittels mit 100 Gew.-teilen Gummigranulat oder elastomeren Kunststoffteilchen in an sich bekannter Weise gemischt. Gegebenenfalls können die üblichen bekannten Zusatz- und Hilfsstoffe zugemischt werden.

Die Aushärtung der Mischung erfolgt nach vorgenommener Formgebung durch Einwirkung von Wasser, vorzugsweise Luftfeuchtigkeit. Wenn gewünscht, kann die Aushärtung durch übliche in der Polyurethan-Chemie gebräuchliche Katalysatoren wie z. B. tertiäre Amine und organische Metallverbindungen beschleunigt werden.

Die nach dem erfindungsgemäßen Verfahren hergestellten elastischen, wetterbeständigen Schichtstoffe können auf allen Anwendungsgebieten verwendet werden, auf denen die bisher bekannten elastischen Schichtstoffe angewandt wurden. Als Beispiele seien Bodenbeläge für Sportplätze, Sporthallen, Laufbahnen usw. genannt.

Die Herstellung der entsprechenden Bodenbeläge erfolgt nach Verfahren und mit Hilfe von Maschinen und Werkzeugen, die dem Fachmann bekannt sind.

Die mit den erfindungsgemäßen Schichtstoffen hergestellten Bodenbeläge sind besonders wetterbeständig und alterungsbeständig. Da die als Klebemittel oder Bindemittel verwendeten Prepolymeren nur einen äußerst geringen Gehalt an freiem TDI aufweisen, ist eine Gesundheitsgefährdung nicht gegeben, wodurch die sonst üblichen Schutzmaßnahmen eingespart werden.

- 7 -

Die Erfindung wird nachstehend anhand von Beispielen
weiter erläutert:

### Beispiel 1

100 Gew.-teile Toluylendiisocyanat (Isomerenverteilung
80/20 Gew.-% 2,4/2,6-TDI) werden mit 570 Gew.-teilen eines
Polypropylenglykols (Molekulargewicht 2000) gemischt und
5 Stunden bis zu einem NCO-Gehalt von 4 % bei 70$^{\circ}$ C gerührt.

Danach werden dem Umsetzungsprodukt 215 Gew.-teile Diphenylmethandiisocyanat (Isomerenverteilung 15 Gew.-%
2,4 und 85 Gew.-% 4,4-MDI) und 115 Gew.-teile des Polypropylenglykols (Molekulargewicht 2000) zugegeben und
2 Stunden bei 70$^{\circ}$ C gerührt.

Das erhaltene Prepolymere hatte einen NCO-Gehalt von
9,1 Gew.-%, eine Viskosität von 3000 mPas bei 20$^{\circ}$ C und
einen Gehalt an freiem TDI-Monomerem von 0,70 Gew.-%.

### Beispiel 2

280 Gew.-teile TDI (80/20 Gew.-% 2,4/2,6-TDI) wurden mit
720 Gew.-teilen Polypropylenglykol (Molekulargewicht 2000)
gemischt und 3 Stunden bei 70$^{\circ}$ C gerührt. Anschließend
wurde durch Dünnschichtdestillation überschüssiges monomeres TDI abgetrennt.

Dem erhaltenen Destillat wurden 215 Gew.-teile MDI (85/
15 Gew.-% 4,4/2,4-MDI) zugegeben und 115 Gew.-teile Polypropylenglykol (Molekulargewicht 2000) eingerührt und bei
70$^{\circ}$ C 3 Stunden gerührt.

Das erhaltene Prepolymere hatte einen NCO-Gehalt von 9,2
Gew.-%, eine Viskosität von 2 500 mPas bei 20$^{\circ}$ C und einen

Gehalt an freiem TDI-Monomeren von 0,32 Gew.-%.

## Vergleichsbeispiel 1

280 Gew.-teile TDI (80/20 Gew.-% 2,4/2,6-TDI) wurden mit 720 Gew.-teilen Polypropylenglykol (Molekulargewicht 2000) gemischt und 3 Stunden bei 70° C gerührt. Das erhaltene Produkt hatte einen NCO-Gehalt von 10,1 Gew.-%, eine Viskosität von 1800 mPas bei 20° C und einen Gehalt an freiem TDI-Monomeren von 17,9 Gew.-%.

## Vergleichsbeispiel 2

406 Gew.-teile MDI (85/15 Gew.-% 4,4/2,4-MDI) wurden mit 594 Gew.-teilen Polypropylenglykol (Molekulargewicht 2000) gemischt und 3 Stunden bei 70° C gerührt.

Das erhaltene Produkt hatte einen NCO-Gehalt von 10,2 Gew.-%, eine Viskosität von 3500 mPas bei 20° C und keinen Gehalt an TDI-Monomeren.

## Beispiel 3

Unter Verwendung des gemäß Beispiel 1 erhaltenen Prepolymeren wurde ein Schichtstoff wie folgt hergestellt:

175 g Bindemittel wurden mit 0,3 g einer 33%igen Lösung von 1,4-Diazabicyclooctan in Dipropylenglykol vermischt. Anschließend wurde diese Menge mit 700 g Gummigranulat (Körnung 1 - 4 mm) vollständig vermischt und in eine Form (30 x 30 cm) eingebracht und auf ca. 11 - 12 mm Dicke mit Glätter verdichtet. Die Aushärtung erfolgte bei Raumtemperatur durch Luftfeuchtigkeit. Die Platte wurde nach 1 Tag entformt und die physikalischen Werte wurden nach einer Woche im Zugversuch bestimmt.

### Beispiel 4

Unter Verwendung des Prepolymeren gemäß Beispiel 2 wurde ein Schichtstoff wie folgt hergestellt:

175 g Bindemittel wurden mit 0,3 g einer 33%igen Lösung von 1,4-Diazabicyclooctan in Dipropylenglykol vermischt. Anschließend wurde diese Menge mit 700 g Gummigranulat (Körnung 1 - 4 mm) vollständig vermischt und in eine Form (30 x 30 cm) eingebracht und auf ca. 11 - 12 mm Dicke mit Glätter verdichtet. Die Aushärtung erfolgte bei Raumtemperatur durch Luftfeuchtigkeit. Die Platte wurde nach 1 Tag entformt und die physikalischen Werte wurden nach 1 Woche im Zugversuch bestimmt.

### Vergleichsbeispiel 3

Unter Verwendung des Prepolymeren gemäß Vergleichsbeispiel 1 wurde ein Schichtstoff wie folgt hergestellt:

175 g Bindemittel wurden mit 0,3 g einer 33%igen Lösung von 1,4-Diazabicyclooctan in Dipropylenglykol vermischt. Anschließend wurde diese Menge mit 700 g Gummigranulat (Körnung 1 - 4 mm) vollständig vermischt und in eine Form (30 x 30 cm) eingebracht und auf ca. 11 - 12 mm Dicke mit Glätter verdichtet. Die Aushärtung erfolgte bei Raumtemperatur durch Luftfeuchtigkeit. Die Platte wurde nach 1 Tag entformt und die physikalischen Werte wurden nach einer Woche im Zugversuch bestimmt.

### Vergleichsbeispiel 4

Unter Verwendung des Prepolymeren gemäß Vergleichsbeispiel 2 wurde ein Schichtstoff wie folgt hergestellt:

175 g Bindemittel wurden mit 0,3 g einer 33%igen Lösung von 1,4-Diazabicyclooctan in Dipropylenglykol vermischt. Anschließend wurde diese Menge mit 700 g Gummigranulat (Körnung 1 - 4 mm) vollständig vermischt und in eine Form (30 x 30 cm) eingebracht und auf ca. 11 - 12 mm Dicke mit Glätter verdichtet. Die Aushärtung erfolgte bei Raumtemperatur durch Luftfeuchtigkeit. Die Platte wurde nach 1 Tag entformt und die physikalischen Werte wurden nach einer Woche im Zugversuch bestimmt.

Die erhaltenen Schichtstoffe wurden auf Zugfestigkeit und Dehnung untersucht.

Ferner wurden sie einer Prüfung auf Wetterbeständigkeit im Xenontest an reinen Filmen nach 42 Tagen unterzogen, wobei die Zugfestigkeit und Dehnung jeweils vor und nach der Bestrahlung gemessen wurde.

Dabei wurden folgende Ergebnisse erhalten:

| | Schichtstoffe gemäss | | | |
| | Beispiel | | Vergleichsbeisp. | |
| | 3 | 4 | 3 | 4 |
| --- | --- | --- | --- | --- |
| Zugfestigkeit in $N/cm^2$ nach DIN 53504 | 4o-65 | 4o-6o | 4o-7o | 4o-6o |
| Bruchdehnung, % nach DIN 53504 | 4o-6o | 4o-6o | 5o-7o | 4o-6o |

Xenontest,
42 Tage durchgeführt an reinen Bindemittelfilmen

| Zugfestigkeit in $N/mm^2$ DIN 53504 | | | | |
| --- | --- | --- | --- | --- |
| anfänglich | 19 | 21 | 25 | 4o |
| nach 42 Tg. | 14 | 15 | 18 | 8 |
| Bruchdehnung, % DIN 53504 | | | | |
| anfänglich | 62o | 57o | 75o | 51o |
| | | 49o | 5oo | 12o |

Aus den obigen Ergebnissen geht hervor, daß die nach dem erfindungsgemäßen Verfahren mit den speziellen Prepolymeren hergestellten elastischen Schichtstoffe wesentlich bessere Eigenschaften aufweisen als die bekannten Schichtstoffe, die auf TDI oder MDI basieren. Gegenüber den Schichtstoffen aus TDI liegt der Vorteil bei einem wesentlich niedrigeren Gehalt an freiem TDI-Monomerem, während der Vorteil gegenüber den bekannten MDI-Bindemittel enthaltenden Schichtstoffen die wesentlich größere Wetterbeständigkeit und Alterungsbeständigkeit ist.

Das Polyurethanbinde- bzw. Klebemittel gemäß der Erfindung, d. h. das Prepolymere auf der Basis von TDI und MDI ergibt überraschende Wetterbeständigkeitseigenschaften.

- 12 -

P a t e n t a n s p r ü c h e

1. Verfahren zur Herstellung elastischer, wetterbeständiger Flächengebilde durch Mischen eines durch Feuchtigkeit aushärtenden Polyurethanbindemittels, welches ein Prepolymer auf der Basis von aromatischen Polyisocyanaten und Polyolen dargestellt, mit Gummi- und/oder elastomeren Kunststoffgranulaten sowie gegebenenfalls weiteren Zusatz- und Hilfsstoffen, Formgebung und Aushärtung der Mischung unter Einwirkung von Feuchtigkeit, dadurch gekennzeichnet, daß das feuchtigkeitshärtende Prepolymer durch

   a) Umsetzen von Toluylendiisocyanat mit einem Polyol bei einem NCO/OH-Verhältnis von wenigstens 1 : 1 und, sofern nach der Umsetzung noch überschüssige Toluylendiisocyanatmonomere vorhanden sind, Entfernen dieser auf unter 1 % an freiem Toluylendiisocyanat, und

   b) anschließendes Umsetzen des Reaktionsproduktes der Stufe a) mit Diphenylmethandiisocyanat und einem Polyol in Mengen, daß das Prepolymere 5 - 15 Gew.-% freie NCO-Gruppen aufweist und weniger als 1 % freies Toluylendiisocyanat enthält.

2. Verfahren nach Anspruch 1, dadurch gekennzeichnet, daß man als Toluylendiisocyanant beliebige Gemische der 2,4- und 2,6-Isomeren, vorzugsweise ein Gemisch von 80/20 von 2,4-/2,6-Toluylendiisocyanat verwendet.

3. Verfahren nach einem der Ansprüche 1 oder 2, dadurch gekennzeichnet, daß man als Diphenylmethandiisocyanat ein Gemisch von 2,4'- und 4,4'- mit hohem Anteil an 4,4'-Isomeren, vorzugsweise ein Gemisch von 85 Gew.-% 4,4'-Diphenylmethandiisocyanat und 15 Gew.-% 2,4'-Diphenylmethandiisocyanat verwendet.

BAD ORIGINAL

- 13 -

4. Verfahren nach Anspruch 1, dadurch gekennzeichnet, daß man anstelle von oder zusätzlich zu Diphenylmethandiisocyanat ein oder mehrere Homologe des Diphenylmethandiisocyanats bzw. davon abgeleitete Modifikationen einsetzt.

5. Verfahren nach Ansprüchen 1 - 3, dadurch gekennzeichnet, daß man als Polyole hydroxylgruppenhaltige Polyäther vorzugsweise Anlagerungsprodukte von Äthylenoxid und/oder Propylenoxid an Äthylenglykol, Propylenglykol, Trimethylolpropyn oder Glyzerin, die im Molekularbereich zwischen 400 bis 6000, vorzugsweise 1000 bis 4000 liegen, verwendet.

6. Verfahren nach Anspruch 1, dadurch gekennzeichnet, daß man überschüssiges Toluylendiisocyanatmonomeres am Ende der Stufe a) so weit entfernt, daß das Endprodukte der Stufe a) weniger als 0,5 % freies Toluylendiisocyanat enthält.

7. Verfahren nach Ansprüchen 1 - 5, dadurch gekennzeichnet, daß das Prepolymere nach Stufe b) 0,5 bis 0,3 % freies Toluylendiisocyanat enthält.

0019120

# EUROPÄISCHER RECHERCHENBERICHT

**Europäisches Patentamt**

Nummer der Anmeldung

EP 80102248.4

## EINSCHLÄGIGE DOKUMENTE

| Kategorie | Kennzeichnung des Dokuments mit Angabe soweit erforderlich der maßgeblichen Teile | betrifft Anspruch |
|---|---|---|
| P,X | <u>DE - A1 - 2 821 001</u> (BAYER) (15-11-1979) <br> + Gesamt + <br> & EP-A1-5 473 (28-11-1979) <br> -- | 1,2, 4-7 |
| | <u>GB - A - 1 520 656</u> (BAYER) <br> + Gesamt + <br> -- | 1,2,4, 5 |
| | <u>GB - A - 1 052 041</u> (DUNLOP) <br> + Gesamt + <br> ---- | 1-3,5 |

**KLASSIFIKATION DER ANMELDUNG (Int Cl 3)**

C 08 L 75/08 //
C 08 L 75/08
C 08 L 21/00
C 08 G 18/10
C 08 G 18/76)

**RECHERCHIERTE SACHGEBIETE (Int. Cl 3)**

C 08 L 75/00
C 08 L 21/00
C 08 G 18/00
E 01 C 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokumen
&: Mitglied der gleichen Patentfamilie, übereinstimmendes Dokument

| X | Der vorliegende Recherchenbericht wurde für alle Patentansprüche erstellt. |

| Recherchenort | Abschlußdatum der Recherche | Prüfer |
|---|---|---|
| WIEN | 25-07-1980 | WEIGERSTORFER |

EPA form 1503.1 06.78